# EUROPEAN PATENT SPECIFICATION

(11) **EP 3 220 254 B1**
(45) Date of publication and mention of the grant of the patent: **19.06.2019**
(21) Application number: 17159935.0
(22) Date of filing: 08.03.2017
(51) Int. Cl.: G06F 3/0489, H04N 5/445, H04N 21/485, H04N 21/462, G06F 3/0488, H04N 5/44

(54) **DISPLAY APPARATUS AND METHOD OF OPERATING THE SAME**
ANZEIGEVORRICHTUNG UND VERFAHREN ZUM BETRIEB DAVON
AFFICHEUR ET SON PROCÉDÉ DE FONCTIONNEMENT

(30) Priority: 17.03.2016 KR 20160032065
(43) Date of publication of application: 20.09.2017
(73) Proprietor: Samsung Electronics Co., Ltd., Gyeonggi-do 16677 (KR)
(72) Inventor: KIM, Jong-hyun, Seoul (KR)
(74) Representative: Taor, Simon Edward William

(56) References cited:
- EP-A1- 2 495 987
- CN-A- 104 216 640
- CN-A- 104 539 863
- US-A1- 2010 064 212
- US-B1- 8 245 158

## Description

Apparatuses and methods consistent with exemplary embodiments relate to display apparatuses and methods of operating display apparatuses.

Display apparatuses such as televisions (TVs) have grown significantly larger in screen size while continually slimming down in thickness. In order for a display apparatus to have a larger display, a thickness of the bezel surrounding the display has been reduced. Therefore, function keys that used to be located in a bezel portion of a display apparatus are being relocated to a rear portion or a side portion of the display apparatus. Therefore, a user may experience a difficulty in intuitively recognizing locations of the function keys positioned on the rear portion or the side portion of the display apparatus.

EP2495987 discloses a display apparatus including a function selector which senses a user's operation for selecting a plurality of functions provided by the display apparatus; and a controller which displays an on screen display (OSD) menu for selecting the plurality of functions on the display unit in accordance with a user's first operation entering within a predetermined distance from the function selector, and operates one selected among the plurality of functions in accordance with a user's second operation.

Exemplary embodiments provide display apparatuses sensing a user accessing the display apparatus and providing the user with indicators representing locations and functions of function keys to improve user convenience, and methods of operating the display apparatuses.

According to a first aspect of the present invention, there is provided an electronic apparatus as set out in claim 1.

The electronic apparatus, wherein the at least one sensor is configured to detect the user approaching at least one of a plurality of regions in the display, the at least one of a plurality of regions being based on the location of the at least one function key.

The at least one function key may be provided at a first location on a rear surface of the electronic apparatus, and the first indicator may be displayed at a second location that is mirror symmetric with the first location.

The second indicator may be displayed at the second location.

The at least one function key may be provided at a first location on one of a rear surface and a side surface of the electronic apparatus, and the first indicator may indicate a portion of a bezel that is adjacent to the first location in the display.

The first indicator may be displayed as overlaid on content that is currently being output on the display.

The first indicator may have a shape that corresponds to the at least one function key.

The controller may be configured to adjust a brightness of content that is currently being output on the display, when the second indicator is displayed.

The electronic apparatus may include a plurality of function keys, and the second indicator may represent the functions of a function key from among the plurality of function keys, the function key being associated with the touch input of the user.

The controller may be further configured to display at least one of the first indicator and the second indicator to be displayed based on a total operation time of the electronic apparatus.

The first indicator may include a graphical user interface (GUI) for executing the functions of the at least one function key.

According to a second aspect of the present invention, there is provided a method according to claim 12.

The displaying the second indicator may comprise adjusting a brightness of content that is currently being output on the display when the second indicator is displayed.

According to a third aspect of the present invention, there is provided a non-transitory computer readable recording medium according to claim 15.

The above and/or other aspects will become apparent and more readily appreciated from the following description of exemplary embodiments, taken in conjunction with the accompanying drawings.

The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

The subsequent drawings illustrate the following:
FIG. 1 is a reference diagram illustrating a display apparatus according to an exemplary embodiment;
FIG. 2 is a block diagram of a display apparatus according to an exemplary embodiment;
FIGS. 3A and 3B are diagrams illustrating at least one sensor included in a display apparatus according to an exemplary embodiment;
FIG. 4 is a diagram illustrating a controller sensing a user approaching a part of a display, which is adjacent to a function key, according to an exemplary embodiment;
FIG. 5 is a diagram illustrating a display apparatus providing a first indicator, according to an exemplary embodiment;
FIG. 6 is a diagram illustrating a display apparatus displaying a first indicator overlaid on top of with content output on a display, according to an embodiment;
FIG. 7 is a diagram illustrating a display apparatus providing a second indicator, according to an exemplary embodiment;
FIG. 8 is a diagram illustrating a display apparatus providing a second indicator, according to an exemplary embodiment;
FIG. 9 is a diagram illustrating another example, in which a display apparatus provides a second indicator, according to an embodiment;
FIGS. 10A and 10B are diagrams illustrating a display apparatus providing a first indicator, according to an exemplary embodiment;
FIG. 11 is a diagram illustrating a display apparatus providing a first indicator including a graphical user interface (GUI) that may substitute for a function key, according to an exemplary embodiment;
FIG. 12 is a diagram of a display apparatus according to an exemplary embodiment;
FIG. 13 is a diagram illustrating a display apparatus providing a third indicator that represents a location of an input/output terminal, according to an exemplary embodiment;
FIG. 14 is a detailed block diagram of a display apparatus according to an exemplary embodiment;
FIG. 15 is a flowchart illustrating a method of operating a display apparatus, according to an exemplary embodiment; and
FIG. 16 is a flowchart illustrating a method performed by a display apparatus, according to an exemplary embodiment, to sense a user accessing an area of a display by using a plurality of display regions.

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, exemplary embodiments will be described in detail with reference to accompanying drawings to the extent that one of ordinary skill in the art would be able to carry out the present disclosure. However, the present disclosure may be implemented in various manners, and is not limited to the exemplary embodiments described herein. In addition, components irrelevant with the description are omitted in the drawings for clear description, and like reference numerals are used for similar components throughout the entire specification.

The terms used in the present disclosure are selected from among common terms that are currently widely used in consideration of their functions in the present disclosure, but the terms may be different according to an intention of one of ordinary skill in the art, a precedent, or the advent of new technology. Therefore, the terms used in the present disclosure are not merely designations of the terms, but the terms are defined based on the meaning of the terms and content throughout the present disclosure.

It will be understood that although the terms "first," "second," etc. may be used herein to describe various components, these components should not be limited by these terms. These components are only used to distinguish one component from another.

Phrases such as "in some embodiments" or "in one embodiment" throughout the present specification may not necessarily denote the same elements.

Some exemplary embodiments of the present disclosure may be described in terms of functional block components and various processing steps. Some or all of the functional blocks may be realized by any number of hardware and/or software components configured to perform the specified functions. For example, the functional blocks of the present disclosure may be realized by one or more microprocessors or circuit structures for performing a predetermined function. In addition, for example, the functional blocks of the present disclosure may be implemented with any programming or scripting language. The functional blocks may be implemented in algorithms that are executed on one or more processors. Also, the present disclosure may employ any number of conventional techniques for electronics configuration, signal processing and/or control, data processing and the like. The words "mechanism," "element," "means," and "configuration" are used broadly and are not limited to mechanical or physical embodiments.

In addition, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

The present disclosure will be described in detail below with reference to accompanying drawings.

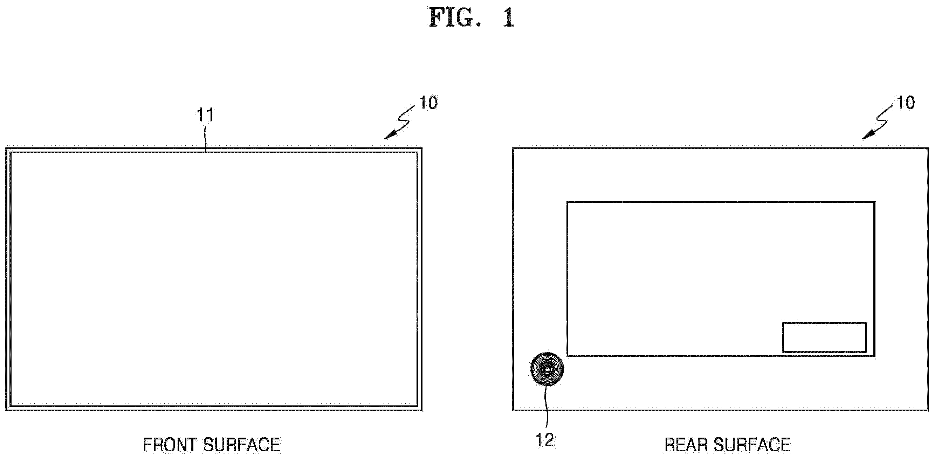

FIG. 1 is a reference diagram illustrating an exemplary display apparatus 10.

As shown in FIG. 1, the display apparatus 10 is an apparatus including a display 11 outputting audio/video (A/V) content, such as an analog television (TV), a digital TV, a three-dimensional (3D) TV, a smart TV, a light-emitting diode (LED) TV, an organic LED (OLED) TV, a plasma TV, a monitor, a video wall, digital signage, a mobile phone, a smartphone, a navigation system, a personal digital assistant (PDA), etc., but is not limited thereto.

Display apparatuses tend to reduce a thickness of a bezel that surrounds a display in order to include a display as large as possible. Therefore, a function key 12 that used to be located at the bezel may be relocated to a rear surface of the display apparatus 10, as shown in FIG. 1. Otherwise, the function key 12 may be located at the rear surface of the display apparatus 10 for better aesthetics.

Here, the function key 12 may receive a user input for controlling the display apparatus 10. For example, the function key 12 may receive a user input for performing functions such as power on/off, menu navigation, channel switching, volume adjusting, operation mode switching, etc. of the display apparatus 10. In addition, the function key 12 may include a physical button, a touch key, a jog wheel, a jog switch, etc., but is not limited thereto. That is, the function key 12 may include any type of device or interface that is capable of receiving the user input. In addition, the function key 12 may be denoted by other terminologies, for example, a panel key, a user input interface, etc.

In addition, although the function key 12 is shown to be located at the rear surface of the display apparatus 10 in FIG. 1, the function key 12 may be located at a side, top, or bottom surface of the display apparatus 10 for the same reasons as described above. Because the function key 12 is located at the rear, side, top, or bottom surface of the display apparatus 10, a user may experience inconvenience when accessing the function key 12. For example, a user who is not aware of the location of the function key 12 in the display apparatus 10 may experience inconvenience when trying to access the function key 12.

Hereinafter, the display apparatus 10 capable of improving user convenience by eliminating the above-noted inconvenience and a method of operating the display apparatus 10 will be described in detail below.

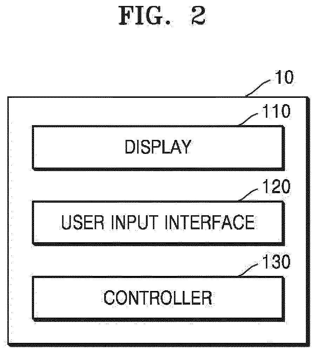

FIG. 2 is a block diagram of a display apparatus 10 according to an exemplary embodiment.

As shown in FIG. 2, the display apparatus 10 may include a display 110, a user input interfacei20, and a controller 130.

The display 110 outputs content. The content may include video, audio, images, games, applications, etc., and may be received through a terrestrial broadcast signal, an internet protocol TV (IPTV) signal, a video-on-demand (VOD) signal, or a signal received through Internet access.

The display 110 may include a display panel and a display controller. The display panel may correspond to the display 11 of FIG. 1. The display panel includes a plurality of pixels, and may output images via the pixels. For example, a liquid crystal display (LCD) device, an OLED, an LED, etc. may be used as the display panel.

In addition, the display 110 may further include a touch panel in some embodiments. The touch panel may receive a touch signal input and relay the input to the display 110. When the display 110 includes the touch panel, a touch screen in which the display panel and the touch panel are overlaid may correspond to the display 11 of FIG. 1.

The user input interface 120 receives a user input for controlling the display apparatus 10. For example, the user input interface 120 may include the function key 12 of FIG. 1, but is not limited thereto. For example, the user input interface 120 may further include a gesture input unit receiving a user motion, a voice receiver for receiving a user's voice, etc.

The controller 130 controls overall operations of the display apparatus 10. For example, the controller 130 may control the display 110 based on a signal provided from the user input interface 120.

According to the present invention, the controller 130 is configured to receive a signal indicating that a user is sensed or detected as approaching the display 11. The controller 130 receives the above signal from at least one sensor included in the display apparatus 10. The at least one sensor may include a proximity sensor, an infrared ray sensor, an electromagnetic sensor, etc. Otherwise, the controller 130 may receive the signal from the display 110. Specifically, when a touch input of the user is received through the touch panel of the display 110, the display 110 may provide the controller 130 with a signal notifying that the user is approaching the display 11.

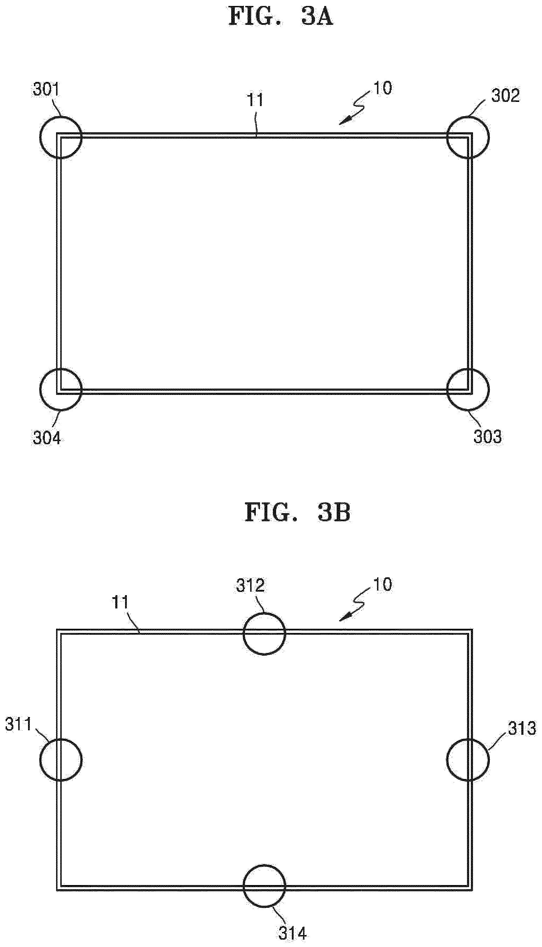

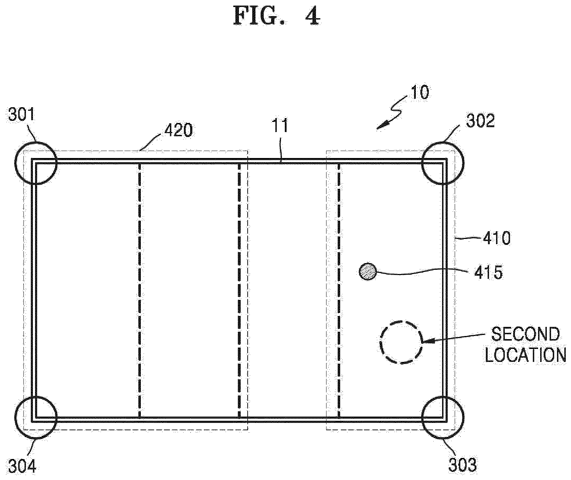

In addition, the controller 130 divides the display 11 into a plurality of display regions, and may identify a user approaching one or more of the divided regions. In this case, the controller 130 may sense a user approaching a display region adjacent to the function key 12, from among the plurality of display regions. Operations of the controller 130 for sensing the user approaching the display region adjacent to the function key 12 will be described later with reference to FIGS. 3 and 4.

According to the present invention, as the user is sensed approaching the display 11, the controller 130 controls the display 110 to display a first indicator representing a location of the function key 12 on the display 11. For example, if the function key 12 is provided at a first location in the rear surface or the side surface of the display apparatus 10, the controller 130 may control the display 110 to display the first indicator at a second location on the display 11, wherein the second location is symmetric with the first location (i.e., the second location is located directly opposite from the first location on either side of the display apparatus with the plane of reflective symmetry located at the center of the display apparatus in parallel with the surface of the display 110). Here, the first indicator may be a visual indicator represented by a geometric shape (e.g., a circle, a polygon, etc.) displayed at the second location or a video in which an image of the figure is moving. Otherwise, the first indicator may have a shape that is similar to or the same as an outer appearance of the function key 12. The shape of the first indicator may be a simplified or stylized form of the outer appearance of the function key 12.

The controller 130 may control the display 110 to display the first indicator at a third location on the display 11, wherein the third location meets a portion of the bezel closest to the first location. Here, the first indicator may be at least one of an image, a text, and a video indicating the portion of the bezel adjacent to the function key 12. For example, the first indicator may be an arrow image or a bookmark image indicating the portion of the bezel adjacent to the function key 12.

In addition, according to an exemplary embodiment, the controller 130 may present the first indicator overlapping with the content that is output through the display 11.

The display apparatus 10 may sense a user approaching the display 11 while in a state of a soft-off state (e.g., an S4 or S5 state according to the advanced configuration and power interface (ACPI) standard) and control the display 110 to display the first indicator. For example, when the user is sensed to be approaching the display 11, the controller 130 may supply power to the display 110 to control the display 110 to display the first indicator.

In addition, in accordance with the present invention, the controller 130 is configured to receive a signal representing that a user is sensed to be in contact with (i.e., touching) the function key 12. For example, the controller 130 may receive the above signal from the user input interface 120. As the user is sensed to be in contact with the function key 12, the controller 130 controls the display 110 to display a second indicator representing functions of the function key 12 with which the user's contact was sensed.

According to an exemplary embodiment, the second indicator may be displayed at the second location or the third location of the display 11. In addition, the second indicator may be a visual indicator that includes text, images, videos, etc. for representing functions of the function key 12. In addition, when the display apparatus 10 includes a plurality of function keys 12, the second indicator may represent functions of a function key where the user's contact has been sensed, from among the plurality of function keys 12.

In addition, according to an exemplary embodiment, as the second indicator is represented, the controller 130 may adjust a brightness of content output through the display 11. For example, the controller 130 may lower the brightness of the content being displayed (e.g., reduction in the brightness by 30%) to highlight the second indicator. As such, the user may easily recognize the second indicator.

In addition, according to an exemplary embodiment, as the user is sensed approaching the display 11, the controller 130 may generate a first indicator including a graphical user interface (GUI) that may substitute for or augment functions of the function key 12 and control the display 110 to display the first indicator on the display 11. In this case, when sensing a touch on the GUI, the controller 130 may display the second indicator representing functions of the function key corresponding to the GUI, where the touch is sensed. Also, the controller 130 may perform the functions of the function key corresponding to the GUI where the touch is sensed.

In addition, according to an exemplary embodiment, the controller 130 may control at least one of the first indicator and the second indicator to be displayed based on a total time of operation of the display apparatus 10. For example, when a total operation time of the display apparatus 10 is greater than a threshold time period (e.g., training period) that is set in advance, the controller 130 determines that the user has finished learning the location and functions of the function key 12, and need not display the first indicator and/or the second indicator even when the user approaches the display 11. Otherwise, when a total operation time of the display apparatus 10 is greater than a first threshold time duration and less than a second threshold time duration, the controller 130 need not display the second indicator even when the user is sensed contacting the function key 12.

FIGS. 3A and 3B are diagrams illustrating at least one sensor included in the display apparatus 10 according to an exemplary embodiment.

According to the exemplary embodiment, the display apparatus 10 may sense a user approaching the display 11 via at least one sensor.

For example, as shown in FIG. 3A, the display apparatus 10 may include a plurality of sensors 301, 302, 303, and 304 at corners of the bezel in the display apparatus 10.

Otherwise, as shown in FIG. 3B, the display apparatus 10 may include a plurality of sensors 311, 312, 313, and 314 at center portions of sides of the bezel in the display apparatus 10. However, one or more exemplary embodiments are not limited thereto. That is, the display apparatus 10 may include a various numbers of sensors that are distributed at any given location of the display apparatus 10.

According to an exemplary embodiment, the controller 130 may sense a user who approaches a part of the display 11, wherein the part is adjacent to the function key 12, by using the plurality of sensors.

FIG. 4 is a diagram illustrating the controller 130 of FIG. 2 sensing a user approaching a part of a display, which is adjacent to the function key 12, according to an exemplary embodiment.

As shown in FIG. 4, the controller 130 may partition the display 11 into a plurality of display regions (denoted by dashed lines). In addition, the controller 130 may calculate a location of the user approaching the display 11 by using intensities of signals transmitted from the plurality of sensors 301, 302, 303, and 304. In addition, the controller 130 may determine whether the calculated location of the user is adjacent to a certain display region in the display 11, wherein the certain display region is adjacent to the function key 12. Here, the certain display region may be a display region including a second location symmetric with the first location in the rear surface or the side surface of the display apparatus 10, wherein the function key 12 is located at the first location.

For example, the controller 130 may obtain a point of intersection (415) of a line with a surface of the display 11 where the line extends from a point of the calculated location of the user in a direction orthogonal to the surface of the display 11. In addition, the controller 130 may determine whether a display region 410 including the obtained point of intersection (415) at the display 11 with the orthogonal line corresponds to the certain display region. Based on a determination result, the controller 130 may determine that the user approaches a part of the display 11, which is adjacent to the function key 12.

Otherwise, in a case where an intensity of the signal transmitted from a sensor (e.g., the sensor 303) that is the closest to the function key 12, from among the plurality of sensors 301, 302, 303, and 304, is the greatest, the controller 130 may determine that the user approaches a part of the display 11, which is adjacent to the function key 12.

In addition, the display apparatus 10 may only include a sensor closest to the function key 12 (i.e., the sensor 303). In this case, the controller 130 may determine that a user approaches a part of the display 11, which is adjacent to the function key 12, based on an intensity of a signal transmitted from the sensor 303.

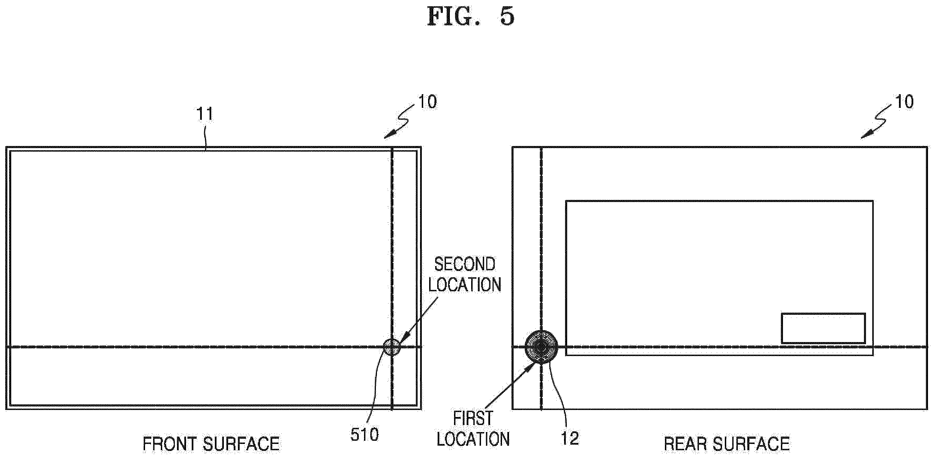

FIG. 5 is a diagram illustrating the display apparatus 10 providing a first indicator according to an exemplary embodiment.

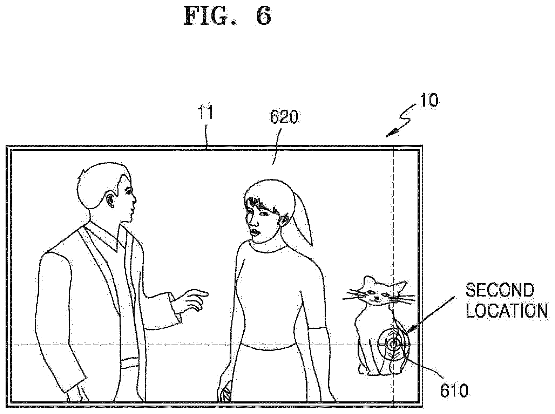

As shown in FIG. 5, the display 110 may display a first indicator 510 at the second location of the display 11 according to the control by the controller 130, wherein the second location is symmetric with the first location of the display apparatus 10 where the function key 12 is provided. The first indicator 510 may be a simple figure or geometric shape (e.g., a circle) representing the location of the function key 12, as shown in FIG. 5. Otherwise, as shown in FIG. 6, a first indicator 610 may have the same or similar shape as an outer appearance of the function key 12.

As described above, the display apparatus 10 according to the exemplary embodiment provides the first indicator 510 at the second location that is symmetric with (i.e., on the reverse side of) the first location where the function key 12 is provided to intuitively notify the user of the location of the function key 12.

FIG. 6 is a diagram illustrating a display apparatus 10 displaying a first indicator 610 overlaid on top of content 620 output on a display, according to an exemplary embodiment.

As shown in FIG. 6, the display 110 may display the content 620 that is output and the first indicator 610 overlapping with each other, according to the control by the controller 130. Therefore, the user may recognize the location of the function key 12 while watching the content 620.

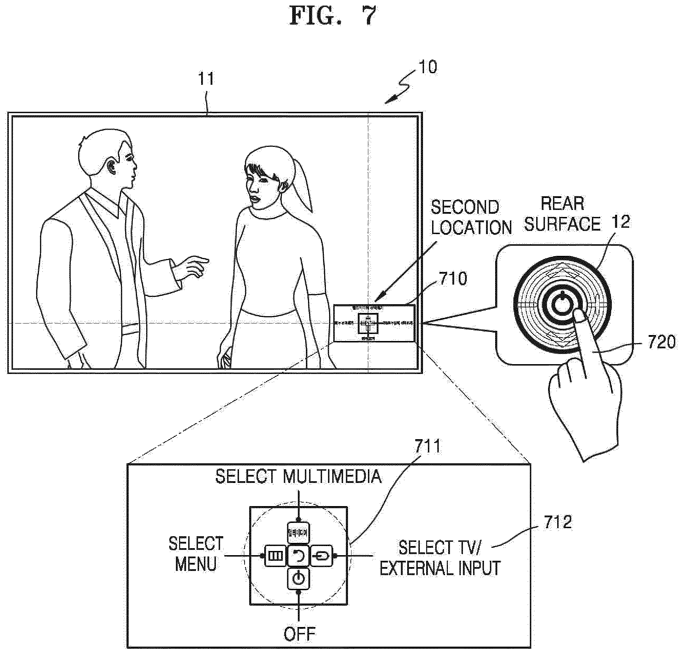

FIG. 7 is a diagram illustrating a display apparatus 10 providing a second indicator 710, according to an exemplary embodiment.

As shown in FIG. 7, and in accordance with the present invention, the controller 130 of the display apparatus 10 generates the second indicator 710, when a user 730 is sensed as touching the function key 12. For example, the controller 130 may receive a signal indicating that the user 730 is sensed as coming in contact with the function key 12, from the user input interface 120. In this case, the user input interface 120 may include a touch sensor or a proximity sensor, and may provide a signal transmitted from the sensor to the controller 130. Otherwise, when a user input 720 manipulating the function key 12 is received, the user input interface 120 may provide a signal indicating that the user has touched the function key 12 to the controller 130.

The controller 130 generates a second indicator 710 representing functions of the function key 12. The second indicator may include, for example, an icon 711 representing the function of the function key 12 and a text 712 (e.g., "select TV/external input") for describing the function of the function key 12.

In addition, the display 110 may display the second indicator 710 at the second location of the display 11, according to the control by the controller 130. Here, the display 110 may display the first indicator switching into the second indicator 710. In other words, the second indicator 710 may replace the first indicator on the display 110 at the second location.

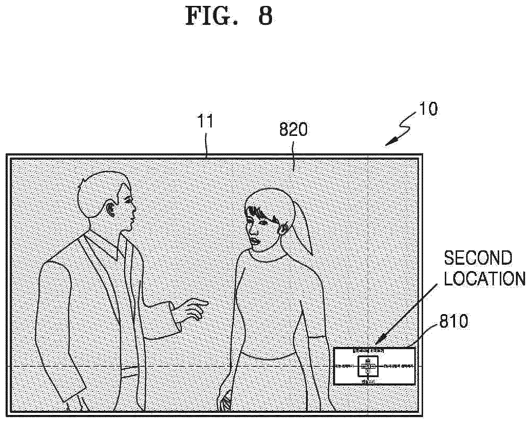

FIG. 8 is a diagram illustrating the display apparatus 10 providing a second indicator 810, according to an exemplary embodiment.

As shown in FIG. 8, the display 110 of the display apparatus 10 may display content 820 that is currently being output and the second indicator 810 to overlap with each other, according to the control by the controller 130. Here, the display 110 may adjust the brightness of the content 820 according to the control by the controller 130. For example, the display 110 may decrease or dim the brightness of the content 820 by 30% while maintaining the brightness of the second indicator 810, according to the control by the controller 130. Therefore, the user may easily recognize the function of the function key 12.

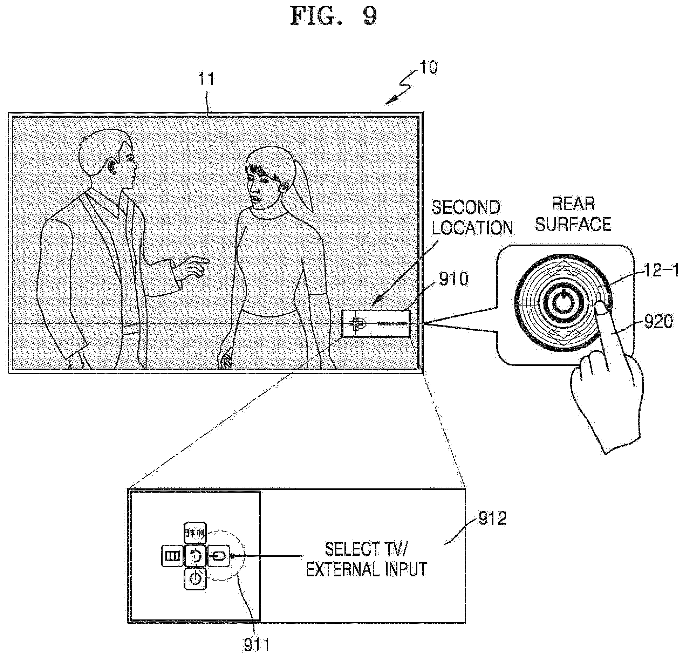

FIG. 9 is a diagram illustrating the display apparatus 10 providing a second indicator 910, according to an exemplary embodiment.

As shown in FIG. 9, the display apparatus 10 may include a plurality of function keys. In this case, when a user 920 is sensed as touching a certain function key 12-1 from among the plurality of function keys, the controller 130 of the display apparatus 10 may generate a second indicator 910 representing functions of the certain function key 12-1 where the contact of the user 920 is sensed. For example, the second indicator 910 may include a text 912 (e.g., "select TV/external input") for describing the function of the certain function key 12-1 where the contact of the user 920 is sensed, from among the plurality of function keys. If the user 920 touches another function key, the controller 130 may update the second indicator 910 so that the second indicator 910 may include a text for describing function of the other function key that the user 920 has touched.

In addition, the second indicator 910 may include icons respectively corresponding to the plurality of function keys. The controller 130 may control the display 110 to emphasize a certain icon 911 corresponding to the function key 12-1, where the contact of the user 920 is sensed, from among the icons. For example, the display 110 may display the icon 911 in a different color, cause the icon 911 to flicker, or use other means of emphasizing the icon 911 according to the control by the controller 130.

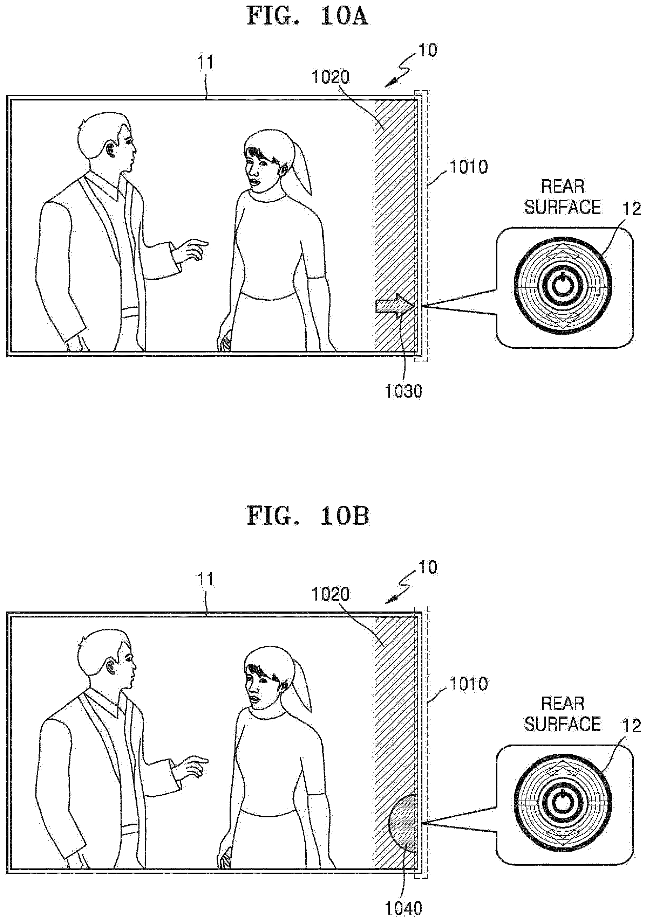

FIGS. 10A and 10B are diagrams illustrating the display apparatus 10 providing a first indicator 1030, according to an exemplary embodiment. According to the present embodiment, the display apparatus 10 may control the display 110 so that the first indicator 1030 may be displayed at a third location 1020 of the display 11, which is in contact with a bezel 1010 that is the closest to the first location in the rear surface or the side surface of the display apparatus 10, wherein the function key 12 is located at the first location.

As shown in FIG. 10A, the first indicator 1030 may be an arrow pointing at a position on the bezel 1010 that is closest to the first location.

Alternatively, as shown in FIG. 10B, a first indicator 1040 may be a semi-circular mark displayed in contact with the bezel 1010 at a point that is the closest to the first location. However, one or more embodiments are not limited thereto, and one of ordinary skill in the art would easily appreciate that the first indicator may be implemented with various symbols, shapes, and marks for notifying the user of the first location.

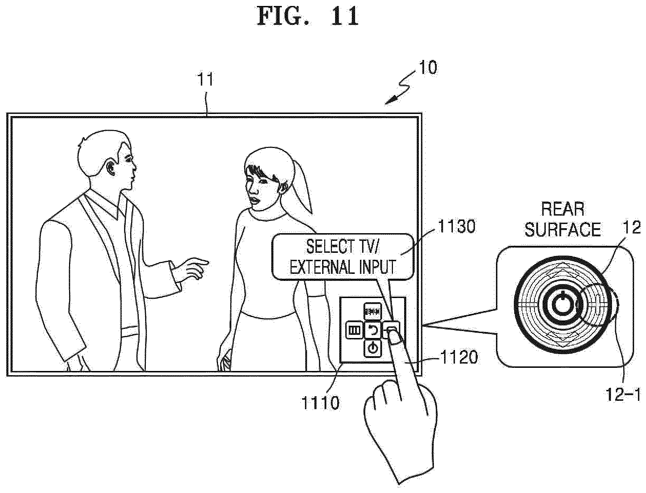

FIG. 11 is a diagram illustrating the display apparatus 10 providing a first indicator 1110 including a GUI that may substitute for a function key 12, according to an exemplary embodiment.

As shown in FIG. 11, when the user is sensed approaching the display 11, the controller 130 may generate the first indicator 1110 including a GUI that may substitute for or augment the function of the function key 12 (e.g., the function may be executed either by the function key 12 or the GUI). The display 110 may display the first indicator 1110 including the GUI at a part of the display 11, according to the control by the controller 130. In this case, the display 11 may include a touch panel.

When a user input 1120 that touches the GUI is sensed, the display 110 may display a second indicator 1130 including a text (e.g., "select TV/external input") for describing a function of a certain function key 12-1 corresponding to the GUI where the user's touch is sensed, according to the control by the controller 130. Here, the second indicator 1130 may overlap with (i.e., overlaid on top of) the first indicator 1110.

In addition, the controller 130 may perform the function of the certain function key 12-1 corresponding to the GUI where the touch is sensed.

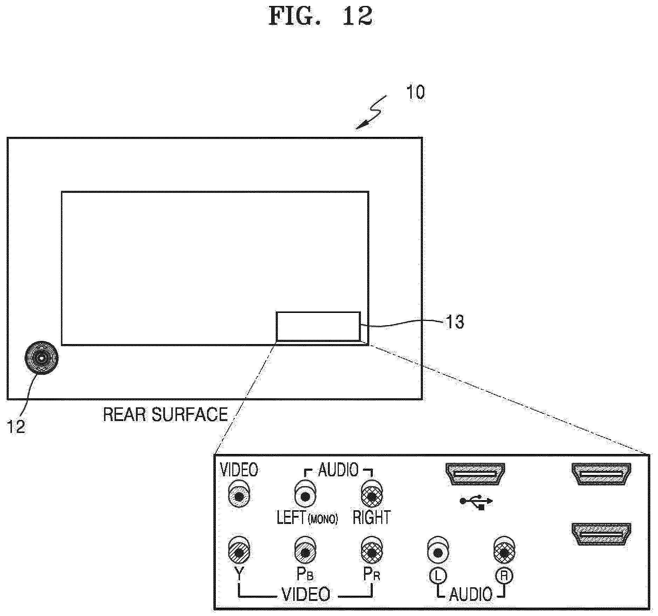

FIG. 12 is a diagram of the display apparatus 10 according to an exemplary embodiment.

As shown in FIG. 12, the display apparatus 10 may include various input/output terminals 13 for transmitting/receiving data to/from one or more external devices, in addition to the function key 12, on the rear surface thereof. The input/output terminals 13 may include, for example, a high-definition multimedia interface (HDMI)/digital video interactive (DVI) input terminal, external video data and audio data input terminal, a universal serial bus (USB) input terminal, a component or RGB data input terminal, a network connection terminal, etc. However, one or more exemplary embodiments are not limited thereto, and one of ordinary skill in the art would easily appreciate that the display apparatus 10 may include various input/output terminals.

According to the present exemplary embodiment, when the user approaches a display region adjacent to the input/output terminal 13, a third indicator representing a location of the input/output terminal 13 at a fifth location corresponding to a fourth location of the rear surface, wherein the input/output terminal 13 is located. Here, that the user approaches the display region adjacent to the input/output terminal 13 may denote that the user approaches, from among the plurality of display regions (see dashed lines of FIG. 4) of the display 11, a display region (see 420 of FIG. 4) adjacent to the input/output terminal 13. Because the exemplary embodiment described with reference to FIG. 4 may be applied to an operation of the controller 130 for sensing the user approaching the display region adjacent to the input/output terminal 13, detailed descriptions about the operation will be omitted.

In addition, although FIG. 12 shows that the input/output terminal 13 is located on the rear surface of the display apparatus 10, the input/output terminal 13 may be located on a side surface of the display apparatus 10. Also, one of ordinary skill in the art would easily appreciate that exemplary embodiments may be applied to the case where the input/output terminal 13 is located on the side surface of the display apparatus 10.

As described above, the display apparatus 10 according to an exemplary embodiment may provide indicators that intuitively indicate locations of the elements at the rear surface or the side surface where the user may approach, and thus, user's convenience may increase.

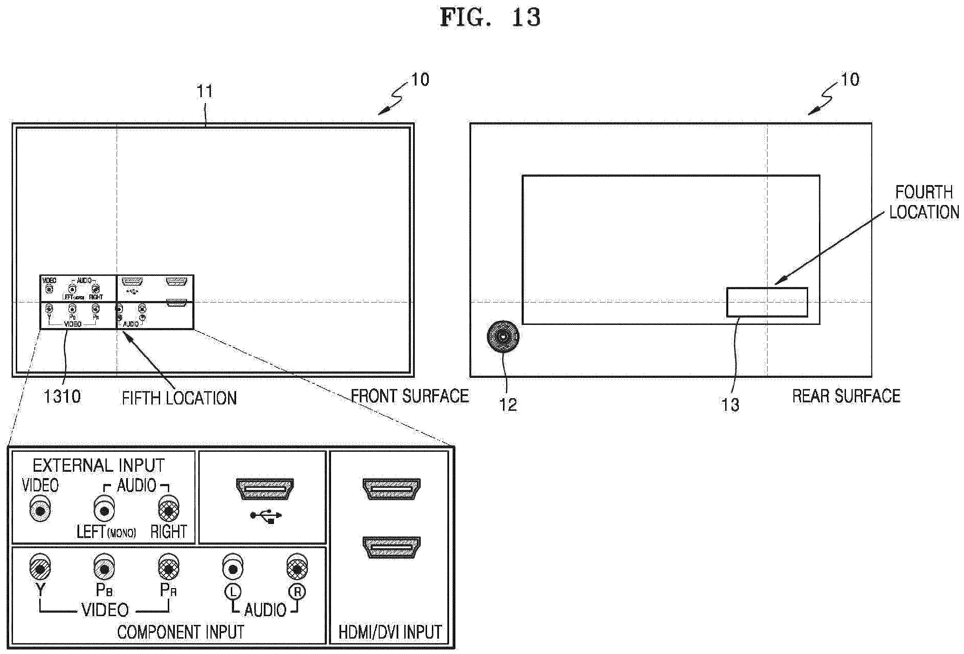

FIG. 13 is a diagram illustrating the display apparatus 10 providing a third indicator 1310 that represents a location of the input/output terminal 13, according to an exemplary embodiment.

In FIG. 13, the display 110 of the display apparatus 10 may provide the third indicator 1310 representing the location of the input/output terminal 13 at the fifth location of the display 11, wherein the fifth location is symmetric with the fourth location at the rear surface or the side surface of the display apparatus 10 where the input/output terminal 13 is provided, according to the control by the controller 130.

The third indicator 1310 may include an image, a text, a video, etc. for representing colors, names, locations, etc. of terminals included in the input/output terminal 13.

In addition, when a certain cable is inserted to a certain input terminal, the display 110 of the display apparatus 10 may visually emphasize the corresponding input terminal represented in the third indicator 1310, according to the control by the controller 130. For example, display 110 may flicker, change the color of, or increase the size of the image representing the input terminal. Therefore, the user may identify whether the cable is appropriately inserted via the display 11.

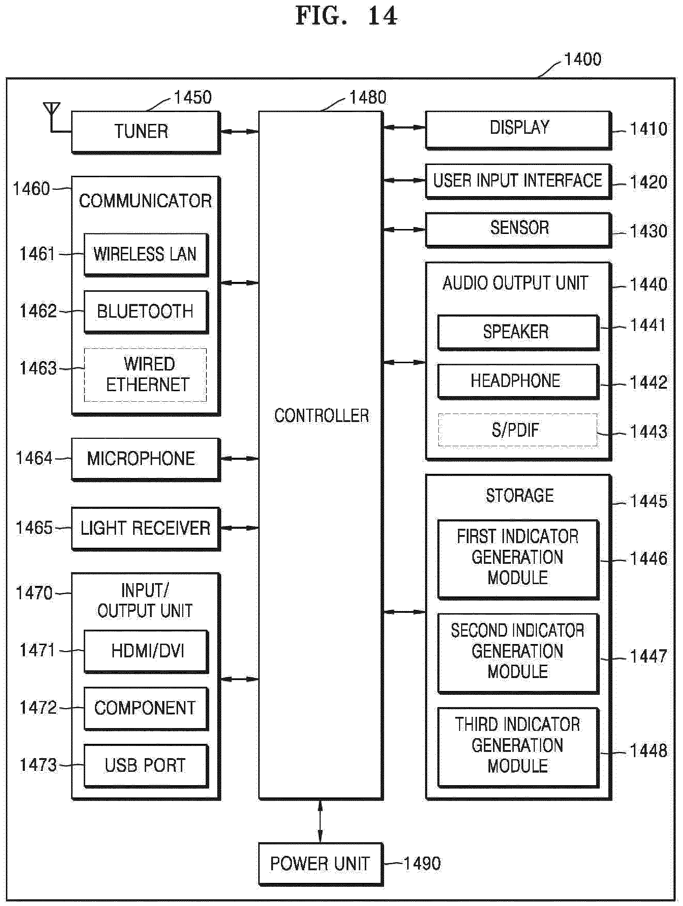

FIG. 14 is a detailed block diagram of a display apparatus 1400 according to an exemplary embodiment.

The display apparatus 1400 of FIG. 14 may show a detailed structure of the display apparatus 10 of FIG. 2. However, not all of the components shown in FIG. 14 are essential elements of the display apparatus 1400. That is, the display apparatus 1400 may include more or fewer elements than those shown in FIG. 14.

As shown in FIG. 14, the display apparatus 1400 may include a display 1410, a user input interface 1420, a sensor 1430, an audio output unit 1440, a storage 1445, a tuner 1450, a communicator 1460, a microphone 1464, a light receiver 1465, an input/output unit 1470, a controller 1480, and a power unit 1490.

The display 1410 outputs video data processed by the display apparatus 1400. For example, the display 1410 may output video data included in a broadcast signal received via the tuner 1450 on a screen according to the control by the controller 1480.

In addition, the display 1410 may output various indicators on the screen according to the control by the controller 1480. The display 1410 may output a GUI according to the control by the controller 1480. In addition, the display 1410 may have functions of the display 110 illustrated with reference to FIG. 2.

In addition, the display 1410 may include various display panels, for example, a liquid crystal display (LCD), a cathode ray tube (CRT) display, a plasma display panel (PDP), an organic light-emitting diode (OLED) display, a field emission display (FED), a light-emitting diode (LED) display, a vacuum fluorescence display (VFD), a digital light processing (DLP) display, a flat panel display (FPD), a three-dimensional (3D) display, a transparent display, etc. Also, the display 1410 may be implemented as a hardware structure of a touch screen including a display panel and a touch panel.

The user input interface 1420 receives a user input for controlling the display apparatus 1400. The user input interface 1420 may include the function key 12, a gesture input unit, and a voice receiver as described above with reference to FIG. 2.

The sensor 1430 may sense a user approaching the display apparatus 1400, and may provide the controller 1480 with sensed information. The sensor 1430 may include at least one sensor, for example, a proximity sensor, an infrared sensor, an electromagnetic sensor, etc.

The audio output unit 1440 outputs audio data processed by the display apparatus 1400. For example, the audio output unit 1440 may output audio data included in a broadcast signal received via the tuner 1450. In addition, the audio output unit 1440 may output audio data input through the communicator 1460 or the input/output unit 1470. The audio output unit 1440 may output audio data stored in the storage 1445 according to the control by the controller 1480. The audio output unit 1440 may include at least one of one or more speakers 1441, a headphone output terminal 1442, and Sony/Philips digital interface (S/PDIF) output terminal 1443.

The storage 1445 stores various data, programs, or applications for driving and controlling the display apparatus 1400 according to the control by the controller 1480. The storage 1445 may store signals or data that is input/output in correspondence with operations of the display 1410, the user input interface 1420, the sensor 1430, the audio output unit 1440, the tuner 1450, the communicator 1460, the microphone 1464, the light receiver 1465, the input/output unit 1470, and the power unit 1490.

The storage 1445 may store a program for controlling the display apparatus 1400 and the controller 1480, applications initially provided by a manufacturer (i.e., preloaded applications) or downloaded from outside (i.e., third-party applications), GUI regarding the applications, various objects (e.g., images, text, videos, etc.) for providing the GUI, user information, documents, database, or related data.

The storage 1445 may include a non-volatile memory, a volatile memory, a hard disk drive (HDD), and a solid-state drive (SSD), etc.

According to an aspect of an exemplary embodiment, the storage 1445 may include a first indicator generation module 1446 for generating a first indicator representing the location of the function key 12, a second indicator generation module 1447 for generating a second indicator representing the function of the function key 12, and a third indicator generation module 1448 for generating a third indicator representing the location of the input/output terminal 13. In addition, the storage 1445 may store objects (e.g., images, text, videos, etc.) for generating the first indicator, the second indicator, and the third indicator, and each of the above modules may be implemented in the form of hardware, software, or a combination of both.

According to the present exemplary embodiment, the storage 1445 may store an instruction for performing at least one of a function of sensing the user approaching the display 11, a function of displaying the first indicator representing the location of the function key 12 on the display 11, a function of sensing the user touching the function key 12, and a function of displaying the second indicator representing the function of the function key 12 on the display 11. The controller 1480 may perform each function by using the instruction stored in the storage 1445.

The tuner 1450 may receive broadcast signals of a frequency band corresponding to a channel number, according to a user input (e.g., a control signal transmitted from a control device, channel number input, channel up-down input, and channel input on an electronic program guide (EPG) screen, etc.).

The tuner 1450 may receive broadcast signals from various sources such as terrestrial broadcast, cable TV broadcast, satellite broadcast, Internet TV broadcast, etc. The tuner 1450 may receive broadcast signals from sources such as analog broadcast, digital broadcast, etc. The broadcast signals received through the tuner 1450 are decoded (e.g., audio decoding, video decoding, or additional information decoding) to be classified as audio, video, and/or additional information, and may be stored in the storage 1445.

The tuner 1450 may be implemented as an all-in-one type inside the display apparatus 1400, or as an external device having a tuner electrically connected to the display apparatus 1400 (e.g., a set-top box or a tuner connected to the input/output unit 1470).

The communicator 1460 may connect the display apparatus 1400 to an external device (e.g., an audio device, etc.) according to the control by the controller 1480. The controller 1480 may transmit/receive content to/from an external device connected to the display apparatus 1400, download applications from the external device, or browse the Web via the communicator 1460. The communicator 1460 may include wireless LAN 1461, Bluetooth 1462, and/or wired Ethernet 1463 in correspondence with performance and structure of the display apparatus 1400. In addition, the communicator 1460 may include a combination of the wireless LAN 1461, the Bluetooth 1462, and the wired Ethernet 1463. The communicator 1460 may receive a control signal from a remote control according to the control by the controller 1480.

In addition, the communicator 1460 may further include other near-distance communication than the Bluetooth, for example, near-field communication (NFC) or Bluetooth Low Energy (BLE).

The microphone 1464 receives user's uttered voice. The microphone 1464 converts the received voice into an electric signal and provides the electric signal to the controller 1480.

The light receiver 1465 receives an optical signal (including a control signal) transmitted from the remote control through a light window of the bezel. The light receiver 1465 may receive an optical signal corresponding to the user input (e.g., touching, pushing, a touch gesture, voice, or motion) from the remote control. A control signal may be extracted from the optical signal according to the control by the controller 1480.

The input/output unit 1470 receives video, audio (e.g., voice, music, etc.), and additional information (e.g., EPG, etc.) from outside the display apparatus 1400 according to the control by the controller 1480. The input/output unit 1470 may include the input/output terminal 13 of FIG. 13 including one of an HDMI/DVI terminal 1471, a component jack 1472, and a universal serial bus (USB) terminal 1473.

One of ordinary skill in the art would appreciate that structures and operations of the input/output unit 1470 may be variously implemented according to exemplary embodiments, and thus, detailed descriptions thereof are omitted.

The controller 1480 controls overall operations of the display apparatus 1400 and flow of signals among the internal elements 1410 to 1490 of the display apparatus 1400, and processes the data. If there is a user input or conditions that are set and stored in advance are satisfied, the controller 1480 may execute an operation system (OS) and various applications stored in the storage 1445.

The controller 1480 may process signals or data provided from inside or outside the display apparatus 1400. The controller 1480 may include at least one processor.

The processor may include a graphics processing unit (GPU) for processing graphics corresponding to the video. The processor may be implemented as a system on chip (SoC), which integrates a core and a GPU. The processor may include a single core, a dual core, a triple core, a quad core, and multiple cores thereof.

In addition, the processor may be implemented as a main processor and a sub-processor operating in a sleep mode.

According to the present exemplary embodiment, the controller 1480 may determine whether the user approaches the display 11 based on a signal provided from the sensor 1430. Otherwise, the controller 1480 may determine whether the user approaches a part of the display 1410 adjacent to the function key 12, based on the above signal. When it is determined that the user approaches the display 1410 or some part of the display 1410, the controller 1480 may generate a first indicator representing the location of the function key 12. In addition, the controller 1480 may control the display 1410 so that the generated first indicator may be displayed at a location in the display 1410, which is symmetric with the location of the function key 12. Otherwise, the controller 1480 may control the display 1410 so that the generated first indicator may be displayed at a location of the display 1410, which is in contact with the bezel that is the closest to the function key 12.

In addition, according to the present exemplary embodiment, when a signal representing that the user has touched the function key 12 is transmitted from the user input interface 1420 or the sensor 1430, the controller 1480 may generate a second indicator representing the function of the function key 12. Here, the display 1410 may change the first indicator to the second indicator, or may display the first indicator overlapping with the second indicator.

In addition, according to the present exemplary embodiment, the controller 1480 may determine whether the user approaches the input/output terminal 13 based on the signal provided from the sensor 1430. When it is determined that the user approaches the input/output terminal 13, the controller 1480 may generate a third indicator representing the location of the input/output terminal 13. In addition, the controller 1480 may control the display 1410 so that the generated third indicator may be displayed at a location in the display 1410, which is symmetric with the location of the input/output terminal 13.

The controller 1480 may have functions of the controller 110 of FIG. 2. Therefore, functions of the controller 110 illustrated with reference to FIGS. 2 to 13 may be applied to the controller 1480 of FIG. 14.

The power unit 1490 supplies electric power input from an external power source to the internal elements 1410 to 1480 of the display apparatus 1400 according to the control by the controller 1480. In addition, the power unit 1490 may supply electric power output from one or more batteries located in the display apparatus 1400 to the internal elements 1410 to 1480, according to the control by the controller 1480.

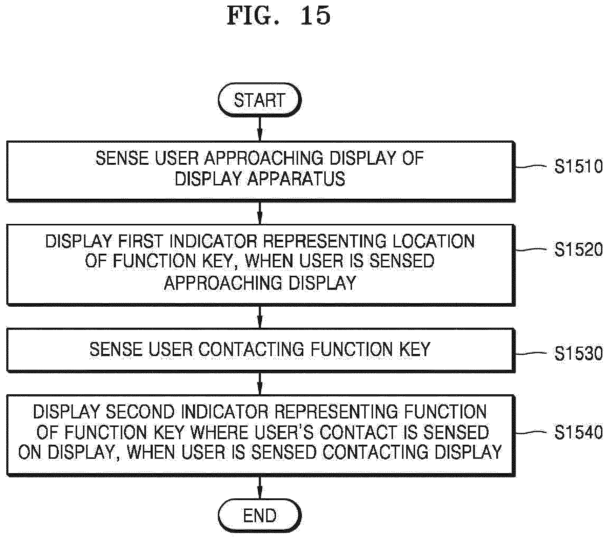

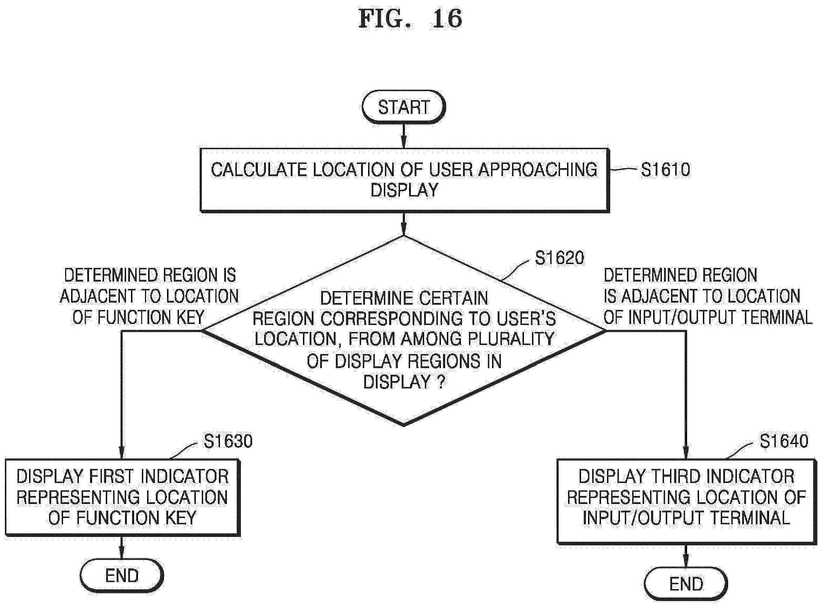

FIGS. 15 and 16 are flowcharts illustrating a method of operating the display apparatus 10, according to an exemplary embodiment. The method of operating the display apparatus 10 illustrated with reference to FIGS. 15 and 16 is related to the embodiments described with reference to FIGS. 1 to 14 above. Therefore, even when omitted, the above descriptions with reference to FIGS. 1 to 14 may be also applied to the method of operating the display apparatus 10 illustrated with reference to FIGS. 15 and 16.

FIG. 15 is a flowchart illustrating a method of operating a display apparatus 10, according to an exemplary embodiment.

In operation S1510, the display apparatus 10 may sense a user approaching the display 11. The display apparatus 10 may include at least one sensor for sensing the user approaching the display 11. For example, the display apparatus 10 may include a proximity sensor, an infrared ray sensor, an electromagnetic sensor, etc.

According to an exemplary embodiment, the display apparatus 10 may include at least one sensor at a position on the bezel adjacent to the function key 12, or may include a plurality of sensors at corners or center portions of the bezel. The display apparatus 10 may sense the user approaching the display 11 based on intensities of the signals transmitted from the at least one sensor.

In addition, the display apparatus 10 may partition the display 11 as a plurality of display regions, and may determine a display region, to which the user is adjacent, from among the plurality of display regions based on the intensities of the signals transmitted from the plurality of sensors. As such, the display apparatus 10 may distinguish the user approaching the function key 12 from the user approaching other elements (e.g., input/output terminal 13, etc.) located on the rear surface or the side surface of the display apparatus 10. How the display apparatus 10 senses the user approaching a part of the display 11 by using the plurality of display regions will be described in detail below with reference to FIG. 16.

In operation S1520, the display apparatus 10 may display a first indicator representing the location of the function key 12 on the display 11, when the user is sensed approaching the display 11.

According to an exemplary embodiment, the display apparatus 10 may have the function key 12 at a first location in the rear surface or the side surface of the display apparatus 10. According to the present embodiment, the display apparatus 10 may display the first indicator at a second location (see FIG. 5) of the display 11, which is symmetric with the first location. Here, the first indicator may be a geometric shape (e.g., a circle, a polygon, etc.) displayed at the second location or a video in which an image of the figure is moving. Otherwise, the first indicator may have a shape that is similar to or the same as an outer appearance of the function key 12. The shape similar to the outer appearance of the function key 12 may be a simplified or stylized form of the outer appearance of the function key 12.

Otherwise, the display apparatus 10 may control the display 110 so that the first indicator may be displayed at a third location (see 1020 of FIG. 10A) of the display 11, wherein the third location is in contact with the bezel at a point that is the closest to the first location. Here, the first indicator may be at least one of an image, a text, and a video indicating the bezel adjacent to the function key 12. For example, the first indicator may be an arrow image or a bookmark image indicating the bezel adjacent to the function key 12.

In addition, according to an exemplary embodiment, the display apparatus 10 may display the first indicator to overlap with the content that is currently being output on the display 11.

In operation S1530, the display apparatus 10 may sense a user touching the function key 12.

According to the present embodiment, the display apparatus 10 may sense the user touching the function key 12 by using a sensor included in the function key 12. Otherwise, the display apparatus 10 may determine that the user contacts the function key 12, when a user input for manipulating the function key 12 is input.

In operation S1540, the display apparatus 10 may display a second indicator representing the function of the function key 12, where the user's contact is sensed, in the display 11.

According to an exemplary embodiment, the second indicator may be displayed at the second location (see FIG. 5) or the third location (see FIG. 10) of the display 11. In addition, the second indicator may include text, images, videos, etc. for representing functions of the function key 12. If the display apparatus 10 includes a plurality of function keys, the second indicator may represent the function of the function key where the user's contact is sensed, from among the plurality of function keys.

According to an exemplary embodiment, the display apparatus 10 may adjust brightness of the content that is currently being output on the display 11, while displaying the second indicator. For example, the display apparatus 10 may lower the brightness of the content (e.g., reducing the brightness by 30%). As such, the user may easily recognize the second indicator.

In addition, according to an exemplary embodiment, when the user is sensed approaching the display 11, the display apparatus 10 may display the first indicator including a GUI that may substitute for the function of the function key 12 in operation S1520. In this case, the display apparatus 10 may sense a user input for touching the GUI in operation S1530, and may display the second indicator representing function of the function key corresponding to the GUI in operation S1540. In addition, when the touch on the GUI is sensed, the display apparatus 10 may perform the function of the function key corresponding to the GUI, where the touch is sensed.

According to an exemplary embodiment, the display apparatus 10 may control at least one of the first indicator and the second indicator to be displayed, based on a total operation time of the display apparatus 10. For example, when the total operation time is greater than a threshold time duration set in advance, the display apparatus 10 may determine that the user has finished learning the location and functions of the function key 12, and may not display the first indicator and the second indicator.

FIG. 16 is a flowchart illustrating a method performed by the display apparatus 10, according to an exemplary embodiment, to sense a user accessing a partial region of the display 11 by using the plurality of display regions.

As shown in FIG. 16, in operation S1610, the display apparatus 10 may determine a location of the user accessing the display 11.

According to an exemplary embodiment, the display apparatus 10 may determine the location of the user approaching the display 11 by using intensities of signals transmitted from a plurality of sensors.

In operation S1620, the display apparatus 10 may determine a certain display region corresponding to the user's location, from among the plurality of display regions in the display 11.

According to an exemplary embodiment, the display apparatus 10 may obtain a point of intersection with a line extending from a point of the calculated user's location in a direction orthogonal to the surface of the display 11. In addition, the display apparatus 10 may determine a display region including the point of intersection.

If the determined display region is adjacent to the location of the function key 12, the display apparatus 10 may display the first indicator representing the location of the function key 12 in operation S1630. Here, whether the display region is adjacent to the location of the function key 12 or not may be determined by whether the determined display region includes a location (e.g., the second location of FIG. 5) in the display 11, wherein the location is symmetric with the location of the function key 12 (that is, the first location of FIG. 5).

If the determined display region is adjacent to the input/output terminal 13, the display apparatus 10 may display the third indicator representing the location of the input/output terminal 13 in operation S1640. Here, whether the display region is adjacent to the location of the input/output terminal 13 or not may be determined by whether the determined display region includes a location of the display 11 (e.g., the fifth location of FIG. 13), wherein the location is symmetric with the location of the input/output terminal 13 (e.g., the fourth location of FIG. 13).

Exemplary embodiments may be implemented as computer programs in general-use digital computers that execute the programs using a non-transitory computer readable recording medium.

Examples of the non-transitory computer readable recording medium include read-only memory (ROM), random access memory (RAM), compact disc read-only memory (CD-ROM), magnetic tapes, floppy disks, optical media storage devices, etc.

The non-transitory computer readable recording medium may also be distributed over network coupled computer systems so that the computer readable code is stored and executed in a distributive manner. In this case, any one of the plurality of distributed computers may execute some of the functions provided above and may transmit a result of execution to at least one of the other distributed computers, and the computer receiving the result may also execute some of the functions provided above and provide the result to other distributed computers.

Although all the components configuring the above exemplary embodiments are described as being combined as one or to operate as a combination in the above description, the scope of the present disclosure is not limited to the above exemplary embodiments. That is, all the components may be selectively combined as at least one to operate within the scope of purposes of the present disclosure. Also, although each of the components may be distinguished as separate hardware; each of the components may be used in whole and/or part and be selectively combined in one and/or a plurality of hardware, and be realized as computer programs containing execution program modules. Code and code segments contained in such a computer program may be simply inferred in regard to one or ordinary skill in the technological field of the present disclosure. The exemplary embodiments may be implemented by reading computer readable media stored on a computer running such a program. Storage media of the computer program may include magnetic recording media, optical recording media, etc.

It should be understood that exemplary embodiments described herein should be considered in a descriptive sense only and not for purposes of limitation. Descriptions of features or aspects within each embodiment should typically be considered as available for other similar features or aspects in other embodiments.

While one or more exemplary embodiments have been described with reference to the figures, it will be understood by those of ordinary skill in the art that various changes in form and details may be made therein without departing from the scope theof present invention as defined by the following claims.

## Claims

1. An electronic apparatus (10) comprising:
a display (11);
at least one sensor configured to detect a user approaching the display;
at least one function key (12) associated with a plurality of functions; and
a controller (130) configured to, in response to detection by the at least one sensor of the user approaching the display, control the display to display a first indicator that represents a location of the at least one function key,
**characterised in that** the controller is further configured to, in response to detection of the user touching the at least one function key, control the display to display a second indicator that represents the plurality of functions associated with the at least one function key.

2. The electronic apparatus of claim 1, wherein the at least one sensor is configured to detect the user approaching at least one of a plurality of regions in the display, the at least one of the plurality of regions being based on the location of the at least one function key.

3. The electronic apparatus of claim 1 or 2, wherein the at least one function key is provided at a first location on a rear surface of the electronic apparatus, and the first indicator is displayed at a second location that is mirror symmetric with the first location.

4. The electronic apparatus of claim 3, wherein the second indicator is displayed at the second location.

5. The electronic apparatus of claim 1, wherein the at least one function key is provided at a first location on one of a rear surface and a side surface of the electronic apparatus, and the first indicator indicates a portion of a bezel that is adjacent to the first location in the display.

6. The electronic apparatus of any one of claims 1 to 5, wherein the first indicator is displayed as overlaid on content that is currently being output on the display.

7. The electronic apparatus of any one of claims 1 to 6, wherein the first indicator has a shape that corresponds to the at least one function key.

8. The electronic apparatus of any one of claims 1 to 7, wherein the controller is further configured to adjust a brightness of content that is currently being output on the display, when the second indicator is being displayed.

9. The electronic apparatus of any one of claims 1 to 8, wherein the electronic apparatus comprises a plurality of function keys, and the
second indicator represents the functions of a function key from among the plurality of function keys, the function key being associated with the touch input of the user.

10. The electronic apparatus of any one of claims 1 to 9, wherein the controller is further configured to control the display to display at least one of the first indicator and the second indicator based on a total operation time of the electronic apparatus.

11. The electronic apparatus of any one of claims 1 to 10, wherein the first indicator comprises a graphical user interface for executing the functions of the at least one function key.

12. A method of operating an electronic apparatus (10), the method comprising:
detecting (S1510) a user approaching a display (11) of the electronic apparatus using at least one sensor of the electronic apparatus configured to detect the user approaching the display;
in response to the detecting the user approaching the display, displaying (S1520) on the display a first indicator that represents a location of at least one function key (12) of the electronic apparatus, wherein the at least one function key is associated with a plurality of functions;
detecting (S1530) the user touching the at least one function key; and
**characterised by** displaying (S1540) on the display, in response to the detecting the user touching the at least one function key, a second indicator that represents the plurality of functions associated with the at least one function key.

13. The method of claim 12, wherein the detecting the user approaching the display comprises detecting the user approaching at least one of a plurality of regions in the display, the at least one of the plurality of regions being based on the location of the at least one function key.

14. The method of claim 12, wherein the at least one function key is provided at a first location on a rear surface of the electronic apparatus, and the first indicator is displayed at a second location that is mirror symmetric with the first location.

15. A non-transitory computer readable recording medium having recorded thereon a program which, when executed by the controller (130) of the electronic apparatus (10) of claim 1, performs a method according to any one of claims 12 to 14.

## Patentansprüche

1. Elektronikgerät (10), das Folgendes umfasst:
ein Display (11),
mindestens einen Sensor, der so konfiguriert ist, dass er einen sich dem Display nähernden Benutzer erkennt, mindestens eine Funktionstaste (12), die mit mehreren Funktionen verknüpft ist, und
eine Steuerung (130), die so konfiguriert ist,
dass sie als Reaktion auf das Erkennen des sich dem Display nähernden Benutzers durch den mindestens einen Sensor das Display so steuert, dass es einen ersten Anzeiger anzeigt, der eine Lage der mindestens einen Funktionstaste darstellt, **dadurch gekennzeichnet, dass** die Steuerung ferner so konfiguriert ist,
dass sie als Reaktion auf das Erkennen, dass der Benutzer die mindestens eine Funktionstaste berührt, das Display so steuert, dass es einen zweiten Anzeiger anzeigt, der die mehreren mit der mindestens einen Funktionstaste verknüpften Funktionen darstellt.

2. Elektronikgerät nach Anspruch 1, wobei der mindestens eine Sensor so konfiguriert ist, dass er den sich mindestens einem von mehreren Bereichen auf dem Display nähernden Benutzer erkennt, wobei der mindestens eine der mehreren Bereiche auf der Lage der mindestens einen Funktionstaste basiert.

3. Elektronikgerät nach Anspruch 1 oder 2, wobei die mindestens eine Funktionstaste an einer ersten Stelle an einer hinteren Fläche des Elektronikgeräts vorgesehen ist und der erste Anzeiger an einer zweiten Stelle angezeigt wird, die zur ersten Stelle spiegelsymmetrisch ist.

4. Elektronikgerät nach Anspruch 3, wobei der zweite Anzeiger an der zweiten Stelle angezeigt wird.

5. Elektronikgerät nach Anspruch 1, wobei die mindestens eine Funktionstaste an einer ersten Stelle an einer hinteren oder einer seitlichen Fläche des Elektronikgeräts vorgesehen ist und der erste Anzeiger einen Abschnitt eines Randes anzeigt, der auf dem Display neben der ersten Stelle liegt.

6. Elektronikgerät nach einem der Ansprüche 1 bis 5, wobei der erste Anzeiger auf Inhalt überlagert angezeigt wird, der derzeit auf dem Display ausgegeben wird.

7. Elektronikgerät nach einem der Ansprüche 1 bis 6, wobei der erste Anzeiger eine Form aufweist, die der mindestens einen Funktionstaste entspricht.

8. Elektronikgerät nach einem der Ansprüche 1 bis 7, wobei die Steuerung ferner so konfiguriert ist, dass sie eine Helligkeit von Inhalt justiert, der derzeit auf dem Display ausgegeben wird, wenn der zweite Anzeiger angezeigt wird.

9. Elektronikgerät nach einem der Ansprüche 1 bis 8, wobei das Elektronikgerät mehrere Funktionstasten umfasst und der zweite Anzeiger die Funktionen einer Funktionstaste unter den mehreren Funktionstasten darstellt, wobei die Funktionstaste mit der Berührungseingabe des Benutzers verknüpft ist.

10. Elektronikgerät nach einem der Ansprüche 1 bis 9, wobei die Steuerung ferner so konfiguriert ist, dass sie das Display so steuert, dass es auf der Grundlage einer Gesamtbetriebsdauer des Elektronikgeräts den ersten oder/und den zweiten Anzeiger anzeigt.

11. Elektronikgerät nach einem der Ansprüche 1 bis 10, wobei der erste Anzeiger eine grafische Benutzerschnittstelle zum Ausführen der Funktionen der mindestens einen Funktionstaste umfasst.

12. Verfahren zum Betreiben eines Elektronikgeräts (10), wobei das Verfahren Folgendes umfasst:
Erkennen (S1510) eines sich einem Display (11) des Elektronikgeräts nähernden Benutzers mithilfe mindestens eines Sensors des Elektronikgeräts, der so konfiguriert ist, dass er den sich dem Display nähernden Benutzer erkennt,
Anzeigen (S1520) eines ersten Anzeigers, der eine Lage mindestens einer Funktionstaste (12) des Elektronikgeräts darstellt, auf dem Display als Reaktion auf das Erkennen des sich dem Display nähernden Benutzers,
wobei die mindestens eine Funktionstaste mit mehreren Funktionen verknüpft ist,
Erkennen (S1530) des Berührens der mindestens einen Funktionstaste durch den Benutzer, und
**gekennzeichnet durch** das Anzeigen (S1540) eines zweiten Anzeigers, der die mehreren mit der mindestens einen Funktionstaste verknüpften Funktionen darstellt, auf dem Display als Reaktion auf das Erkennen, dass der Benutzer die mindestens eine Funktionstaste berührt.

13. Verfahren nach Anspruch 12, wobei das Erkennen des sich dem Display nähernden Benutzers das Erkennen umfasst, dass sich der Benutzer mindestens einem von mehreren Bereichen auf dem Display nähert, wobei der mindestens eine der mehreren Bereiche auf der Lage der mindestens einen Funktionstaste basiert.

14. Verfahren nach Anspruch 12, wobei die mindestens eine Funktionstaste an einer ersten Stelle an einer hinteren Fläche des Elektronikgeräts vorgesehen ist und der erste Anzeiger an einer zweiten Stelle angezeigt wird, die zur ersten Stelle spiegelsymmetrisch ist.

15. Nichtflüchtiges, computerlesbares Aufzeichnungsmedium, auf dem ein Programm aufgezeichnet ist, das, wenn es von der Steuerung (130) des Elektronikgeräts (10) nach Anspruch 1 ausgeführt wird, ein Verfahren nach einem der Ansprüche 12 bis 14 durchführt.

## Revendications

1. Appareil électronique (10) comprenant :
un écran (11) ;
au moins un capteur configuré pour détecter un utilisateur s'approchant de l'écran ;
au moins une touche de fonction (12) associée à une pluralité de fonctions ; et
un contrôleur (130) configuré pour, en réponse à la détection, par l'au moins un capteur, de l'utilisateur s'approchant de l'écran, contrôler l'écran pour qu'il affiche un premier indicateur représentant un emplacement de l'au moins une touche de fonction,
l'appareil électronique étant **caractérisé en ce que** le contrôleur est en outre configuré pour :
en réponse à la détection de l'utilisateur touchant l'au moins une touche de fonction, contrôler l'écran pour qu'il affiche un second indicateur représentant la pluralité de fonctions associées à l'au moins une touche de fonction.

2. Appareil électronique selon la revendication 1, dans lequel l'au moins un capteur est configuré pour détecter l'utilisateur s'approchant d'au moins une région d'une pluralité de régions sur l'écran, l'au moins une région de la pluralité de régions étant basée sur l'emplacement de l'au moins une touche de fonction.

3. Appareil électronique selon la revendication 1 ou 2, dans lequel l'au moins une touche de fonction est située à un premier emplacement sur une surface arrière de l'appareil électronique, et le premier indicateur est affiché à un second emplacement qui est symétrique en miroir par rapport au premier emplacement.

4. Appareil électronique selon la revendication 3, dans lequel le second indicateur est affiché au second emplacement.

5. Appareil électronique selon la revendication 1, dans lequel l'au moins une touche de fonction est située à un premier emplacement sur une surface arrière ou une surface latérale de l'appareil électronique, et le premier indicateur indique une partie d'un bord qui est adjacent au premier emplacement sur l'écran.

6. Appareil électronique selon l'une quelconque des revendications 1 à 5, dans lequel le premier indicateur est affiché superposé au contenu qui est en cours d'affichage sur l'écran.

7. Appareil électronique selon l'une quelconque des revendications 1 à 6, dans lequel le premier indicateur a une forme qui correspondant à l'au moins une touche de fonction.

8. Appareil électronique selon l'une quelconque des revendications 1 à 7, dans lequel le contrôleur est en outre configuré pour régler une luminosité du contenu qui est en cours d'affichage sur l'écran quand le second indicateur est affiché.

9. Appareil électronique selon l'une quelconque des revendications 1 à 8, l'appareil électronique comprenant une pluralité de touches de fonction, et
le second indicateur représentant les fonctions d'une touche de fonction parmi la pluralité de touches de fonction, la touche de fonction étant associée à l'entrée tactile de l'utilisateur.

10. Appareil électronique selon l'une quelconque des revendications 1 à 9, dans lequel le contrôleur est en outre configuré pour contrôler l'écran pour qu'il affiche le premier indicateur et/ou le second indicateur sur la base d'un temps de fonctionnement total de l'appareil électronique.

11. Appareil électronique selon l'une quelconque des revendications 1 à 10, dans lequel le premier indicateur comprend une interface utilisateur graphique pour exécuter les fonctions de l'au moins une touche de fonction.

12. Procédé de fonctionnement d'un appareil électronique (10), le procédé consistant à :
détecter (S1510) un utilisateur s'approchant d'un écran (11) de l'appareil électronique au moyen d'au moins un capteur de l'appareil électronique configuré pour détecter l'utilisateur s'approchant de l'écran ;
en réponse à la détection de l'utilisateur s'approchant de l'écran, afficher (S1520) sur l'écran un premier indicateur représentant un emplacement d'au moins une touche de fonction (12) de l'appareil électronique,
l'au moins une touche de fonction étant associée à une pluralité de fonctions ;
détecter (S1530) l'utilisateur touchant l'au moins une touche de fonction ; et
le procédé étant **caractérisé par** l'étape consistant à afficher (S1540) sur l'écran, en réponse à la détection de l'utilisateur touchant l'au moins une touche de fonction, un second indicateur représentant la pluralité de fonctions associées à l'au moins une touche de fonction.

13. Procédé selon la revendication 12, dans lequel la détection de l'utilisateur s'approchant de l'écran consiste à détecter l'utilisateur s'approchant d'au moins une région d'une pluralité de régions sur l'écran, l'au moins une région de la pluralité de régions étant basée sur l'emplacement de l'au moins une touche de fonction.

14. Procédé selon la revendication 12, dans lequel l'au moins une touche de fonction est située à un premier emplacement sur une surface arrière de l'appareil électronique, et le premier indicateur est affiché à un second emplacement qui est symétrique en miroir par rapport au premier emplacement.

15. Support d'enregistrement non temporaire lisible par ordinateur sur lequel est enregistré un programme qui, lorsqu'il est exécuté par le contrôleur (130) de l'appareil électronique (10) selon la revendication 1, réalise un procédé selon l'une quelconque des revendications 12 à 14.
